# EUROPEAN PATENT APPLICATION

(11) **EP 4 847 800 A1**
(43) Date of publication of application: **02.12.2026**
(21) Application number: 26177830.2
(22) Date of filing: 11.05.2026
(51) Int. Cl.: F16H 25/20, F16H 25/22

(54) **A LINEAR ACTUATOR COMPRISING A TERMINAL CUSHIONING UNIT**

(30) Priority: 21.05.2025 JP 2025084838
(71) Applicant: KABUSHIKI KAISHA TOYOTA JIDOSHOKKI, Kariya-shi, Aichi 448-8671 (JP)
(72) Inventor: MASUDA, Hideo, Kariya-shi, Aichi, 448-8671 (JP)
(74) Representative: TBK

(57) **Abstract**

An actuator includes a motor, a rotating member configured to be rotationally driven by the motor, a translation member configured to be moved along an axial direction of the rotating member in response to rotation of the rotating member, and a terminal cushioning unit configured to cushion motion of the translation member at one or more of stroke terminal portions on an advancing side and a retreating side of the translation member.

## Description

### TECHNICAL FIELD

The present invention relates to an actuator.

### BACKGROUND

Conventionally, a structure is known in which rotary motion of a rotating body rotated by a motor is converted into translational motion using a conversion mechanism such as a ball screw (see, for example, Japanese Unexamined Patent Publication No. 2024-89228).

In such a structure, at the terminal end of the advancing or retreating stroke of a member that undergoes translational motion, the member may continue its translational motion due to the inertia of the motor and the rotating body.

Therefore, for example, there is a risk that an overshoot will occur in the driving force applied to a drive target of the actuator at the terminal end of the advancing stroke, or that an impact will occur due to a collision of the member at the terminal end of the retreating stroke.

In order to stop such translational motion of the member by the motor itself, a motor capable of generating a higher torque is required. In order to address such translational motion of the member through motor control, the speed of the member at the terminal end of the stroke must be reduced, which results in a decrease in the response speed of the operation of the actuator.

An object of the present invention is to provide an actuator that is capable of suppressing motion of a translation member caused by inertia of a motor and a rotating body at the terminal end of the advancing or retreating stroke of the translation member, while suppressing an increase in the power of the motor and a decrease in response speed.

### SUMMARY

(1) An actuator according to one aspect of the present invention includes a motor, a rotating member configured to be rotationally driven by the motor, a translation member configured to be moved along an axial direction of the rotating member in response to rotation of the rotating member, and a terminal cushioning unit configured to cushion motion of the translation member at one or more of stroke terminal portions on an advancing side and a retreating side of the translation member.

### BRIEF DESCRIPTION OF THE DRAWINGS

Fig. 1 is a schematic cross-sectional view of an example of an actuator according to an embodiment.
Fig. 2 is a cross-sectional view taken along line II-II of Fig. 1.

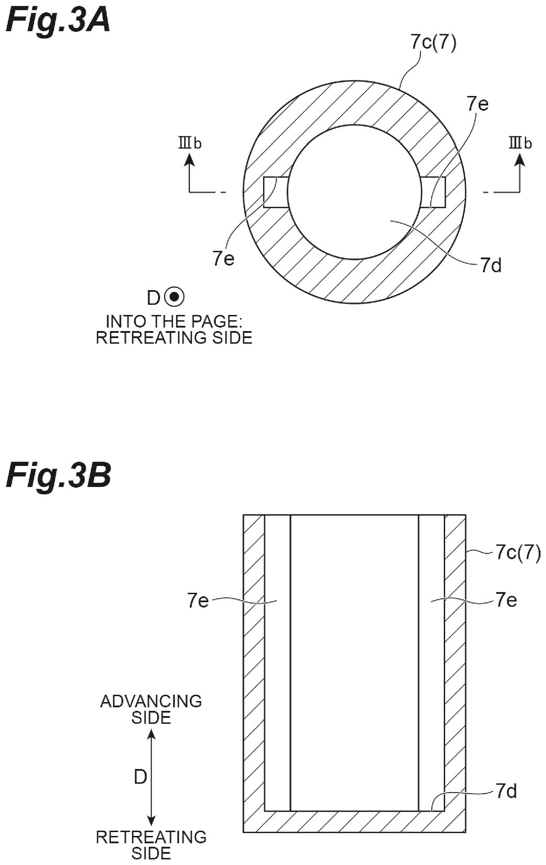

Fig. 3A is an axial view of an example housing of Fig. 2.
Fig. 3B is a cross-sectional view taken along line IIIb-IIIb of Fig. 3A.
Fig. 4A is a plan view of an example of a terminal member.
Fig. 4B is a cross-sectional view taken along line IVb-IVb of Fig. 4A.

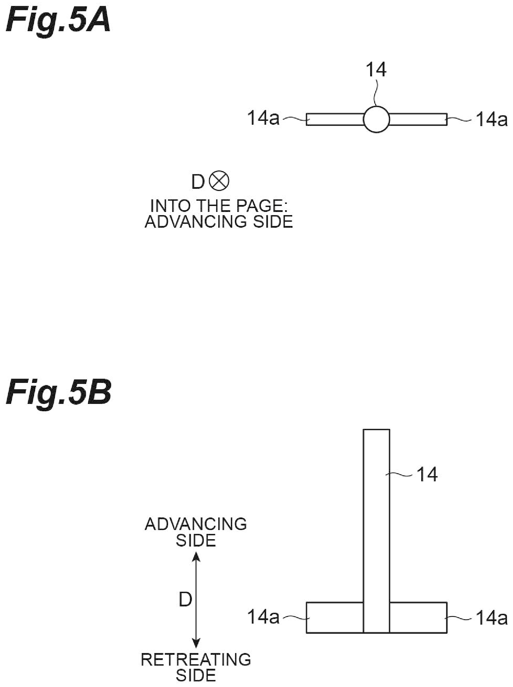

Fig. 5A is a plan view of an example of a rod portion.
Fig. 5B is a side view of the rod portion of Fig. 5A.
Fig. 6 is a schematic cross-sectional view illustrating an advancing operation of the actuator of Fig. 1.
Fig. 7 is a schematic cross-sectional view illustrating a retreating operation of the actuator of Fig. 1.
Fig. 8 is a schematic cross-sectional view illustrating the retreating operation following Fig. 7.
Fig. 9 is a schematic cross-sectional view illustrating the retreating operation following Fig. 8.
Fig. 10 is a schematic cross-sectional view illustrating an origin return operation following Fig. 9.

### DETAILED DESCRIPTION

Hereinafter, embodiments of the present invention will be described with reference to the drawings. In the following description, the same reference signs are used for identical or corresponding elements, and overlapping descriptions are omitted.

In the following description, a direction parallel to the center line of a translation member 5 may be referred to as an axial direction D. A direction perpendicular to the center line of the translation member 5 may be referred to as a radial direction. A direction along a circumference centered on the center line of the translation member 5 when viewed from a direction parallel to the center line of the translation member 5 may be referred to as a circumferential direction. A direction in which the translation member 5 advances in the axial direction D may be referred to as an "advancing side." A direction in which the translation member 5 retreats in the axial direction D may be referred to as a "retreating side." The direction in which the translation member 5 advances means the direction in which an actuator 100 moves the translation member 5 in order to drive a drive target with the translation member 5. The direction in which the translation member 5 retreats means the direction in which the actuator 100 moves the translation member 5 in order to release the driving of the drive target by the translation member 5.

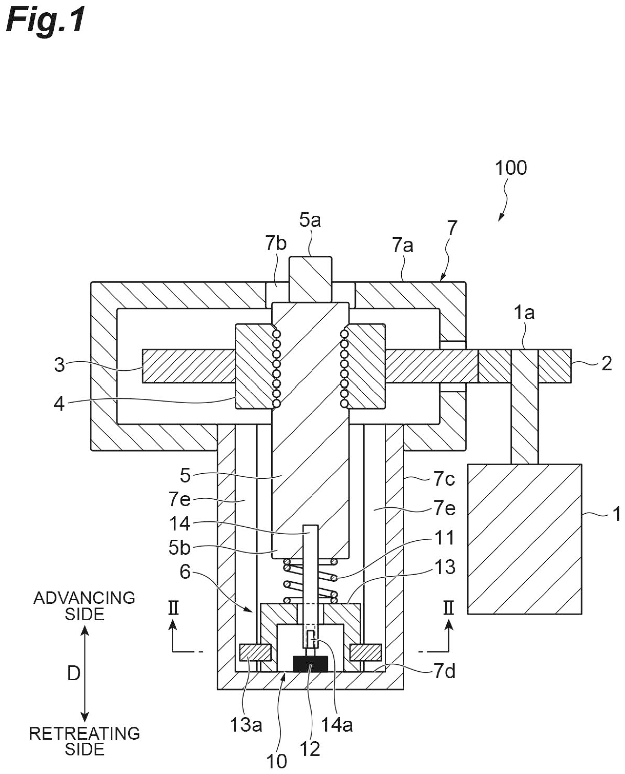

As illustrated in Fig. 1, the actuator 100 according to the present embodiment includes a motor 1, a pinion gear 2, a gear 3 (rotating member), a nut portion 4, a translation member 5, a housing 7, and a terminal cushioning unit 10. The actuator 100 is used, for example, to generate hydraulic pressure for actuating an electro-hydraulic brake of an industrial vehicle such as a forklift.

The motor 1 is an electric motor serving as a drive source of the actuator 100. The motor 1 may be fixed to the outside of the housing 7. As the motor 1, a known rotary electric motor such as, for example, a DC brushless motor, a stepping motor, or a servo motor can be used. The motor 1 may be electrically connected to a drive circuit and controlled to rotate forward and reverse.

The housing 7 is a case that accommodates the gear 3, the nut portion 4, the translation member 5, the terminal cushioning unit 10, and the like. The housing 7 is formed of, for example, an aluminum alloy or the like.

The housing 7 includes a gear accommodating portion 7a and a translation member guide portion 7c. The gear accommodating portion 7a is a box-shaped portion that rotatably supports the gear 3 via the translation member 5. The gear accommodating portion 7a may include a mounting portion for the motor 1.

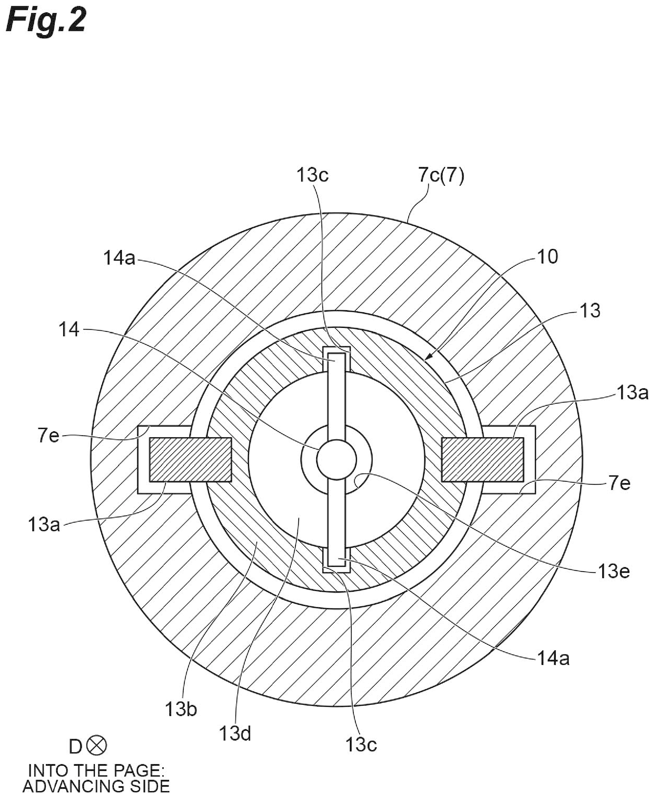

The translation member guide portion 7c is a portion that guides movement of the translation member 5 along the axial direction D and restricts radial runout. The translation member guide portion 7c is provided so as to communicate with the gear accommodating portion 7a at the retreating-side portion of the gear accommodating portion 7a. The translation member guide portion 7c has a cylindrical shape with an inner diameter larger than the outer diameter of the translation member 5 (see Fig. 2). A bottom portion 7d of the translation member guide portion 7c is a flat portion that closes the retreating-side end of the translation member guide portion 7c (see Fig.s 3A and 3B).

The pinion gear 2 is an external gear attached to the output shaft 1a of the motor 1. The pinion gear 2 meshes with the external teeth of the gear 3 protruding from the side of the gear accommodating portion 7a of the housing 7.

The gear 3 is an external gear that meshes with the pinion gear 2. The nut portion 4 is provided coaxially at the center of the gear 3. The nut portion 4 rotates integrally with the gear 3. The gear 3 and the nut portion 4 are made non-rotatable relative to each other by, for example, spline coupling, press fitting, or welding. The gear 3 and the nut portion 4 are rotationally driven by the motor 1. A ball screw groove is formed on the inner circumferential surface of the nut portion 4.

The translation member 5 is a shaft member that is linearly moved along the axial direction D in response to rotation of the nut portion 4. The translation member 5 is supported by the housing 7 so as to be movable along the axial direction D. The translation member 5 is, for example, a steel cylinder, and a screw groove for a ball screw (not illustrated) is formed on the outer circumferential surface. The inner diameter of the translation member 5 is smaller than the inner diameter of the nut portion 4. The screw groove formed on the outer circumferential surface of the translation member 5 is threadably engaged with the nut portion 4 via a plurality of balls. As the nut portion 4 rotates together with the gear 3, the translation member 5 advances or retreats along the axial direction D.

An advancing-side end portion 5a of the translation member 5 is the end portion on the advancing side of the translation member 5. The advancing-side end portion 5a is a portion that comes into contact with and presses the drive target. When the translation member 5 advances along the axial direction D, the advancing-side end portion 5a protrudes to the outside from an opening 7b of the gear accommodating portion 7a of the housing 7.

A retreating-side end portion 5b of the translation member 5 is the end portion on the retreating side of the translation member 5. The retreating-side end portion 5b is located inside the translation member guide portion 7c of the housing 7. When the translation member 5 advances along the axial direction D, the retreating-side end portion 5b moves away from the bottom portion 7d of the translation member guide portion 7c. When the translation member 5 retreats along the axial direction D, the retreating-side end portion 5b approaches the bottom portion 7d of the translation member guide portion 7c. The retreating-side end portion 5b of the translation member 5 is a surface against which one advancing-side end of the coil spring 11 described later comes into contact.

As illustrated in Fig.s 1, 2, 3A, and 3B, a pair of grooves 7e is formed on the inner circumferential surface of the cylindrical translation member guide portion 7c. The grooves 7e are provided at predetermined locations in the circumferential direction on the inner circumferential surface of the translation member guide portion 7c. The grooves 7e are parallel grooves extending linearly along the axial direction D. The grooves 7e are formed by cutting out a part of the inner circumferential surface of the translation member guide portion 7c. The length of the pair of grooves 7e along the axial direction D is set to a length corresponding to the movement range (stroke length) of the advancing and retreating of the translation member 5. The pair of grooves 7e may be provided along the axial direction D over the entire extent from the gear accommodating portion 7a side to the bottom portion 7d in the translation member guide portion 7c. The pair of grooves 7e is provided at positions symmetrical with respect to the central axis of the translation member 5 on the inner circumferential surface of the translation member guide portion 7c. Although not particularly limited, in the example of Fig. 1, the pair of grooves 7e extends along a plane including the output shaft 1a of the motor 1 and the central axis of the translation member 5. The depth of the pair of grooves 7e along the radial direction of the translation member guide portion 7c is a depth such that anti-rotation pins 13a provided on a terminal member 13 described later do not reach the bottom of the grooves 7e.

The terminal cushioning unit 10 cushions the motion of the translation member 5 at a stroke terminal portion 6 on the retreating side of the translation member 5. The terminal cushioning unit 10 is disposed on the bottom portion 7d side of the translation member guide portion 7c relative to the retreating-side end portion 5b of the translation member 5. The terminal cushioning unit 10 is located at the bottom portion 7d of the translation member guide portion 7c at the stroke terminal portion 6.

The terminal cushioning unit 10 includes a coil spring 11 (elastic portion), a rubber member 12 (damping portion), the terminal member 13, and a rod portion 14. In the terminal cushioning unit 10, the coil spring 11 and the terminal member 13 are provided in this order between the retreating-side end portion 5b of the translation member 5 and the bottom portion 7d of the translation member guide portion 7c. The terminal member 13 is provided on the bottom portion 7d side so as to sandwich the coil spring 11 with the translation member 5 in the axial direction D. The terminal member 13 is made of a metal material such as, for example, steel or aluminum. The terminal member 13 is lighter than the translation member 5.

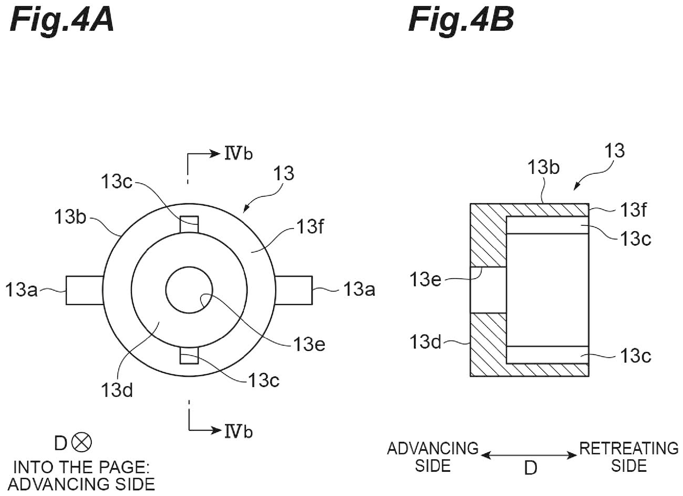

As illustrated in Fig.s 2, 4A, and 4B, the terminal member 13 mainly includes a cylindrical portion 13b and a top plate portion 13d. The cylindrical portion 13b is the main body portion of the terminal member 13, and has a substantially annular cross-section perpendicular to the axial direction D over the entire circumference (see Fig. 4A). The outer diameter of the cylindrical portion 13b is larger than the outer diameter of the coil spring 11 and smaller than the inner diameter of the cylindrical translation member guide portion 7c by a predetermined dimension (see Fig.s 1 and 2). The cylindrical portion 13b functions as a guide member that is movable along the axial direction D in a state substantially coaxial with the central axis of the translation member 5.

The cylindrical portion 13b is closed at one advancing-side end by the top plate portion 13d (see Fig. 4B). The cylindrical portion 13b is open at the other retreating-side end (see Fig. 4B). The top plate portion 13d is a flat plate portion extending perpendicular to the axial direction D at one advancing-side end of the cylindrical portion 13b. The top plate portion 13d is, for example, disc-shaped, and is formed integrally such that the outer peripheral portion of the top plate portion 13d is continuous with one end of the cylindrical portion 13b. The outer diameter of the top plate portion 13d is larger than the outer diameter of the coil spring 11. The top plate portion 13d functions as a bearing surface for the other retreating-side end of the coil spring 11. A through hole 13e through which the rod portion 14 described later is inserted is formed in the central portion of the top plate portion 13d.

An open end 13f on the retreating side of the cylindrical portion 13b extends toward the bottom portion 7d side of the translation member guide portion 7c along the axial direction D in a state where the terminal member 13 is disposed inside the translation member guide portion 7c (see Fig. 1). The inner diameter and depth of the cylindrical portion 13b are larger than the outer dimension of the rubber member 12. The depth of the cylindrical portion 13b means the depth from the open end 13f to the top plate portion 13d. Therefore, the open end 13f of the cylindrical portion 13b comes into contact with the bottom portion 7d in a state where the terminal member 13 accommodates the rubber member 12 at the stroke terminal portion 6 on the retreating side of the translation member 5.

A pair of anti-rotation pins 13a is provided on the outer circumferential surface of the cylindrical portion 13b so as to protrude from the outer circumferential surface of the cylindrical portion 13b. The pair of anti-rotation pins 13a is provided at positions symmetrical with respect to the central axis of the terminal member 13 on the outer circumferential surface of the cylindrical portion 13b. The anti-rotation pins 13a may be, for example, round bars or square bars made of steel. The anti-rotation pins 13a are fixed to the cylindrical portion 13b by, for example, press fitting or caulking.

The pair of anti-rotation pins 13a is provided at positions symmetrical with respect to the central axis of the translation member 5 in a state where the terminal member 13 is disposed inside the translation member guide portion 7c. In the example of Fig. 1, the pair of anti-rotation pins 13a extends along a plane including the output shaft 1a of the motor 1 and the central axis of the translation member 5, intersecting the central axis of the translation member 5, similarly to the pair of grooves 7e.

A pair of grooves 13c is formed on the inner circumferential surface of the cylindrical portion 13b. The grooves 13c are provided at predetermined locations in the circumferential direction on the inner circumferential surface of the cylindrical portion 13b. The grooves 13c are parallel grooves extending linearly along the axial direction D. The grooves 13c are formed by cutting out a part of the inner circumferential surface of the cylindrical portion 13b. The length of the pair of grooves 13c along the axial direction D is set to a length corresponding to the range over which the anti-rotation plates 14a of the rod portion 14 described later move as the translation member 5 advances and retreats. The pair of grooves 13c may be provided along the axial direction D over the entire extent from the open end 13f to the top plate portion 13d in the cylindrical portion 13b. The pair of grooves 13c is provided at positions symmetrical with respect to the central axis of the terminal member 13 on the inner circumferential surface of the cylindrical portion 13b. Although not particularly limited, in the examples of Fig.s 2, 4A, and 4B, the pair of grooves 13c is provided in a direction orthogonal to the direction connecting the pair of anti-rotation pins 13a.

As illustrated in Fig.s 1, 2, 5A, and 5B, the rod portion 14 is, for example, a round bar-shaped member. The rod portion 14 is fixed to the retreating-side end portion 5b of the translation member 5 so as to extend along the axial direction D in a state where the translation member 5 is disposed inside the translation member guide portion 7c. The rod portion 14 is configured using, for example, a bar material such as spring steel so as to have torsional elasticity in the circumferential direction. The rod portion 14 is fixed to the translation member 5 by, for example, press fitting. The rod portion 14 includes a pair of anti-rotation plates 14a at its retreating-side end.

The pair of anti-rotation plates 14a is provided so as to protrude from the outer circumferential surface of the retreating-side end of the rod portion 14. The pair of anti-rotation plates 14a is provided at positions symmetrical with respect to the central axis of the rod portion 14 on the outer circumferential surface of the rod portion 14. The anti-rotation plates 14a may be, for example, flat plate members made of steel. The anti-rotation plates 14a are fixed to the rod portion 14 by, for example, welding.

The rod portion 14 is inserted into the through hole 13e of the terminal member 13 from the side of the open end 13f. The rod portion 14 is disposed inside the translation member guide portion 7c together with the translation member 5, with the end opposite to the anti-rotation plates 14a fixed to the retreating-side end portion 5b of the translation member 5.

At this time, the pair of anti-rotation plates 14a is inserted into the pair of grooves 13c on the inner circumferential surface of the cylindrical portion 13b and engages with the grooves 13c in the circumferential direction. The pair of anti-rotation pins 13a is inserted into the grooves 7e of the translation member guide portion 7c and engages with the grooves 7e in the circumferential direction. The pair of anti-rotation pins 13a is guided by the grooves 7e extending along the axial direction D of the translation member guide portion 7c. As a result, relative rotation in the circumferential direction between the translation member 5 and the translation member guide portion 7c is restricted via the rod portion 14 and the terminal member 13, and the translation member 5 can linearly move along the axial direction D in response to rotation of the nut portion 4.

The inner diameter of the through hole 13e in the central portion of the top plate portion 13d is larger than the outer diameter of the rod portion 14 and smaller than the radial dimension of the pair of anti-rotation plates 14a. Therefore, when the rod portion 14 is inserted into the through hole 13e of the terminal member 13 from the side of the open end 13f and fixed to the translation member 5, the translation member 5 advances alone along the axial direction D until the pair of anti-rotation plates 14a comes into contact with the top plate portion 13d. After the pair of anti-rotation plates 14a comes into contact with the top plate portion 13d, the translation member 5 advances along the axial direction D together with the terminal member 13.

On the other hand, the pair of anti-rotation plates 14a is guided by the pair of grooves 13c extending along the axial direction D of the terminal member 13. The pair of anti-rotation plates 14a is movable along the axial direction D in the direction away from the top plate portion 13d.
When the translation member 5 retreats, the rod portion 14 fixed to the translation member 5 also moves to the retreating side. Although the pair of anti-rotation plates 14a moves away from the top plate portion 13d, the state in which the pair of anti-rotation plates 14a engages with the grooves 13c in the circumferential direction continues. As a result, similarly to the advancing operation, the translation member 5 can linearly move along the axial direction D in response to rotation of the nut portion 4.

The coil spring 11 is an elastic member that is pressed by the translation member 5 at the stroke terminal portion 6. The coil spring 11 is disposed between the retreating-side end portion 5b of the translation member 5 and the top plate portion 13d of the terminal member 13 (see Fig.s 4A and 4B). The coil spring 11 is compressed along the axial direction D in response to the retreating operation of the translation member 5.

The free length, spring constant, and mounting position of the coil spring 11 are set such that the elastic deformation amount of the coil spring 11 is less than a predetermined amount when the translation member 5 retreats to the stroke terminal portion 6 and the open end 13f of the cylindrical portion 13b comes into contact with the bottom portion 7d of the translation member guide portion 7c. Therefore, until the open end 13f of the cylindrical portion 13b comes into contact with the bottom portion 7d of the translation member guide portion 7c, the coil spring 11 transmits force from the retreating-side end portion 5b of the translation member 5 to the top plate portion 13d of the terminal member 13 with an elastic force corresponding to an elastic deformation amount less than the predetermined amount. At this time, the pair of anti-rotation plates 14a of the rod portion 14 is separated from the top plate portion 13d by the elastic deformation amount, which is less than the predetermined amount.

After the open end 13f of the cylindrical portion 13b comes into contact with the bottom portion 7d of the translation member guide portion 7c, the coil spring 11 is compressed between the retreating-side end portion 5b of the translation member 5 and the top plate portion 13d of the terminal member 13, thereby absorbing the kinetic energy of the translation member 5. The coil spring 11 has a free length and spring constant that allow elastic deformation to the extent that the rubber member 12 is pressed and compressed by the rod portion 14 as described later.

The rubber member 12 is a damping member that damps the motion of the translation member 5 along the axial direction at the stroke terminal portion 6. The rubber member 12 may be a rectangular parallelepiped or cylindrical block body. The rubber member 12 is fixed to the bottom portion 7d of the translation member guide portion 7c by, for example, adhesion. The rubber member 12 is made of, for example, high-elastic-modulus urethane rubber or silicone rubber.

In the example of Fig. 1, the outer dimensions of the rubber member 12 are smaller than the inner diameter of the cylindrical portion 13b of the terminal member 13. The rubber member 12 is fixed to the central portion of the bottom portion 7d of the translation member guide portion 7c so as to be positioned on the extension line of the rod portion 14. Therefore, when the translation member 5 retreats to the stroke terminal portion 6, the rubber member 12 does not come into contact with the open end 13f of the cylindrical portion 13b, but comes into contact with the rod portion 14. The rubber member 12 is pressed by the rod portion 14 and deforms viscoelastically due to further retreating of the translation member 5, thereby absorbing the kinetic energy of the translation member 5 fixed to the rod portion 14.

In the rod portion 14 that is pressing and deforming the rubber member 12, the movement of the other retreating-side end in the circumferential direction is restricted by the rubber member 12 and the grooves 13c. On the other hand, at the one advancing-side end fixed to the translation member 5, a rotational force acts on the translation member 5 due to the inertia of the motor 1, the pinion gear 2, the gear 3, the nut portion 4, and the translation member 5. Therefore, the rod portion 14 undergoes torsional deformation in response to rotation of the motor 1, the pinion gear 2, the gear 3, the nut portion 4, and the translation member 5, in a state where the rod portion 14 is in contact with the rubber member 12 at the stroke terminal portion 6. By this torsional deformation of the rod portion 14, the kinetic energy of the translation member 5 fixed to the rod portion 14 is absorbed.

The thickness of the rubber member 12 is set to a thickness such that the rubber member 12 is not pressed by the rod portion 14 until the elastic deformation amount of the coil spring 11 reaches the predetermined amount, in a state where the open end 13f of the cylindrical portion 13b is in contact with the bottom portion 7d of the translation member guide portion 7c. That is, the rubber member 12 starts to damp the motion of the translation member 5 along the axial direction D after the elastic deformation amount of the coil spring 11 reaches the predetermined amount as the coil spring 11 is pressed by the translation member 5.

The operation of the actuator 100 will be described with reference to Fig.s 6 to 10.

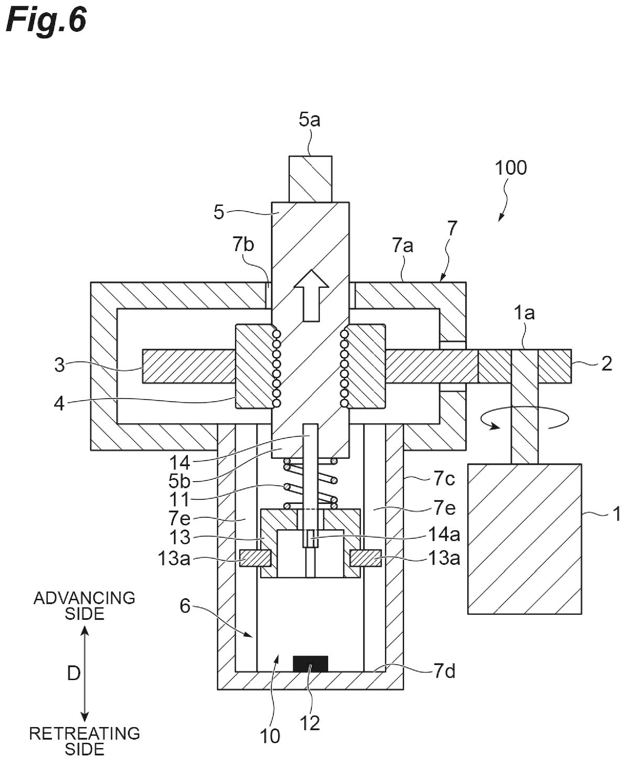

Fig. 6 illustrates a state in which the motor 1 is driven in the forward direction, the pinion gear 2 rotates in the direction of the arrow in the figure, and the gear 3 and the nut portion 4 are driven. Relative rotation in the circumferential direction between the translation member 5 and the translation member guide portion 7c is restricted via the rod portion 14 and the terminal member 13. In response to rotation of the nut portion 4, the translation member 5 moves toward the advancing side in the axial direction D. A pressing force is applied toward a drive target such as a hydraulic piston of a hydraulic brake, for example, by the advancing-side end portion 5a protruding to the outside from the opening 7b of the housing 7. At this time, as the pair of anti-rotation plates 14a of the rod portion 14 comes into contact with the top plate portion 13d, the terminal member 13 also moves to the advancing side with the coil spring 11 in a state close to its free length.

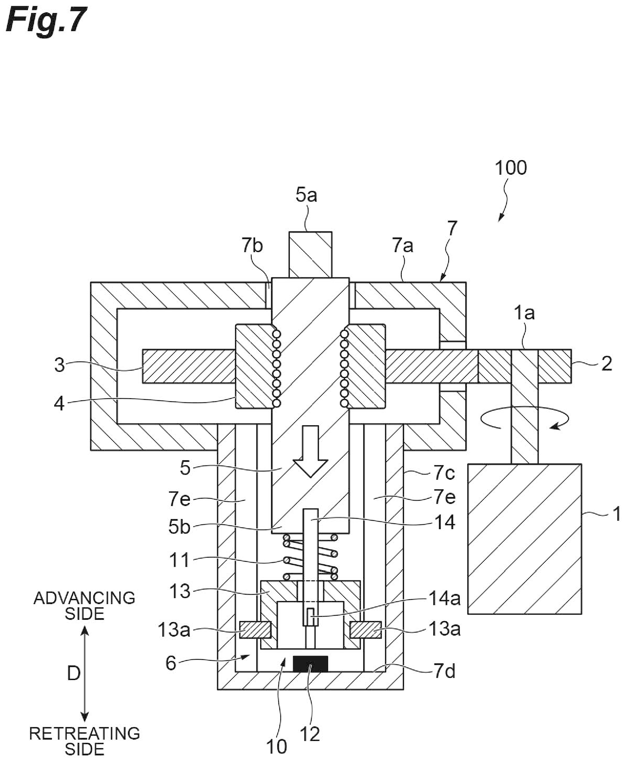

Fig. 7 illustrates a state immediately after the motor 1 switches to reverse drive and the translation member 5 starts the retreating operation. Relative rotation in the circumferential direction between the translation member 5 and the translation member guide portion 7c is restricted via the rod portion 14 and the terminal member 13. In response to rotation of the nut portion 4, the translation member 5 moves toward the retreating side in the axial direction D. The retreating-side end portion 5b of the translation member 5 starts to press the coil spring 11. The coil spring 11 is compressed from its free length along the axial direction D, resulting in an elastic deformation amount less than the predetermined amount. The pair of anti-rotation plates 14a of the rod portion 14 is separated from the top plate portion 13d. At this stage, the open end 13f of the cylindrical portion 13b has not yet reached the bottom portion 7d. The rod portion 14 is not in contact with the rubber member 12.

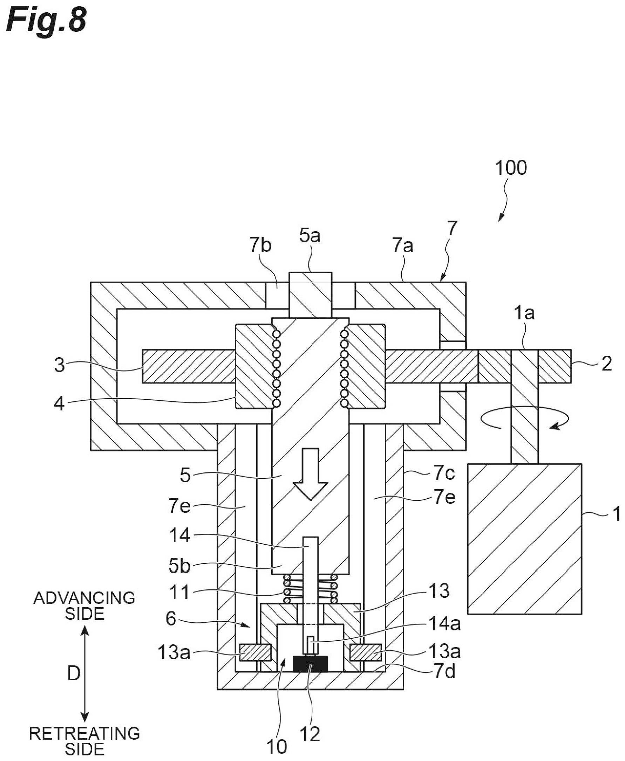

Fig. 8 illustrates a state in which the retreating of the translation member 5 has further progressed to reach the stroke terminal portion 6, and the open end 13f of the cylindrical portion 13b has come into contact with the bottom portion 7d. The elastic deformation amount of the coil spring 11 has reached the predetermined amount. However, the anti-rotation plates 14a of the rod portion 14 have not yet reached the rubber member 12. At this stage, the kinetic energy of the translation member 5 is absorbed by the elastic deformation of the coil spring 11. Since the terminal member 13 is lighter than the translation member 5, the impact when the open end 13f of the cylindrical portion 13b collides with the bottom portion 7d is smaller compared to the case where the translation member 5 directly collides with the bottom portion 7d.

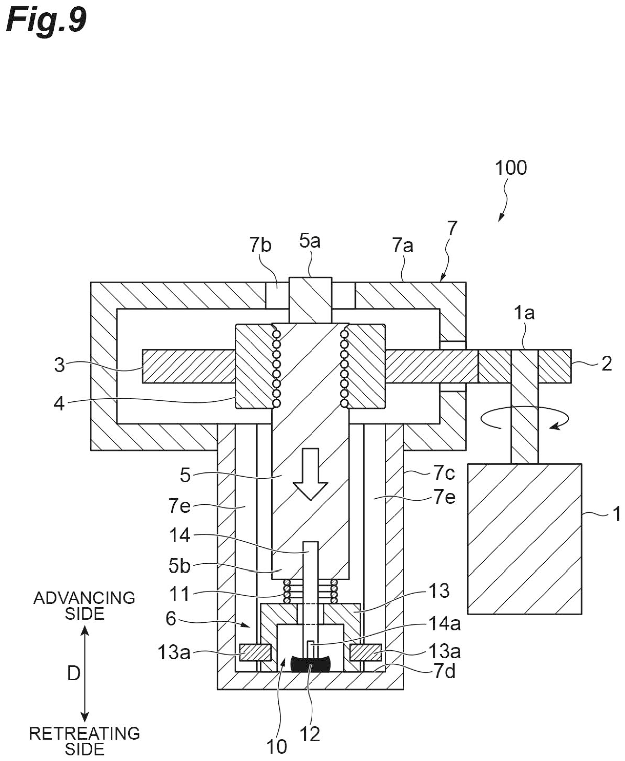

Fig. 9 illustrates a state in which the retreating of the translation member 5 has further progressed and the retreating-side tip of the rod portion 14 is pressing the rubber member 12. The coil spring 11 is further compressed, while the rubber member 12 is viscoelastically compressed and deformed. As a result, the kinetic energy of the translation member 5 is further absorbed. In addition, by the torsional deformation of the rod portion 14, the kinetic energy of the translation member 5 is further absorbed. Note that the presence of the damping portion such as the rubber member 12 suppresses vibration caused by the elastic force that would occur in the case of the coil spring 11 alone.

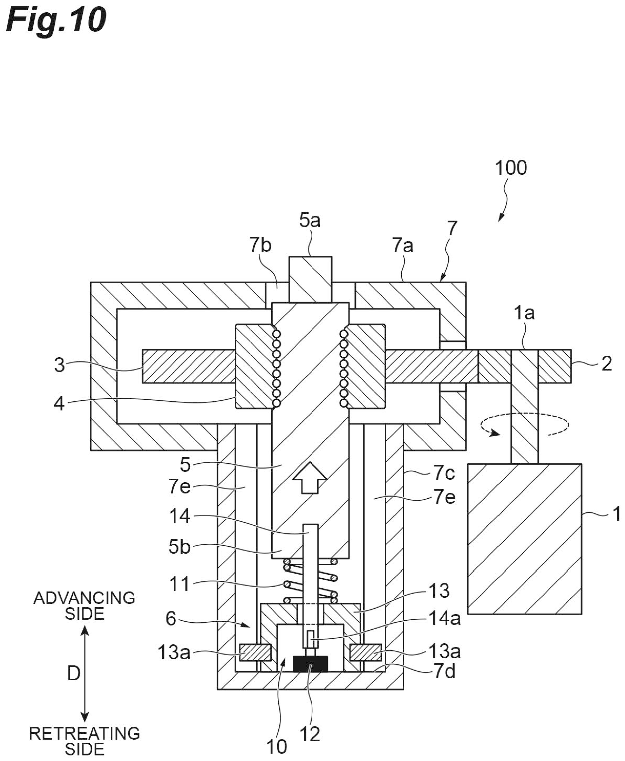

Fig. 10 illustrates a state in which the cushioning by the terminal cushioning unit 10 has ended and the translation member 5 is coming to rest at the origin return position. The coil spring 11 returns to a state close to its original free length. The elastic deformation of the coil spring 11, the compressive deformation of the rubber member 12, and the torsional deformation of the rod portion 14 are released. As a result, the actuator 100 enters a standby state in preparation for the next forward drive.

In the actuator 100 configured as described above, the motion of the translation member 5 is cushioned by the terminal cushioning unit 10 at the stroke terminal portion 6. This makes it possible to cushion the motion of the translation member 5 caused by the inertia of the motor 1 and the gear 3, without relying on, for example, stopping the translation member 5 by the torque of the motor 1 itself or reducing the speed of the translation member 5 through control of the motor 1. Therefore, it is possible to suppress the motion of the translation member 5 caused by the inertia of the motor 1 and the gear 3 at the stroke terminal portion 6 of the advancing or retreating stroke of the translation member 5, while suppressing an increase in the power of the motor 1 and a decrease in response speed.

The terminal cushioning unit 10 includes the coil spring 11 that is pressed by the translation member 5 at the stroke terminal portion 6, and the rubber member 12 that damps the motion of the translation member 5 along the axial direction D at the stroke terminal portion 6. This makes it possible to absorb the kinetic energy of the translation member 5 through the elastic deformation of the coil spring 11 and the damping by the rubber member 12.

The rubber member 12 starts to damp the motion of the translation member 5 along the axial direction D after the elastic deformation amount of the coil spring 11 reaches the predetermined amount as the coil spring 11 is pressed by the translation member 5. This makes it possible to absorb the kinetic energy of the translation member 5 in stages by sequentially using the coil spring 11 and the rubber member 12.

The actuator 100 includes the housing 7 that accommodates the translation member 5 and the terminal cushioning unit 10 and includes the bottom portion 7d at which the terminal cushioning unit 10 is located at the stroke terminal portion 6. The terminal cushioning unit 10 includes the terminal member 13 provided on the bottom portion 7d side so as to sandwich the coil spring 11 with the translation member 5 in the axial direction D. After the terminal member 13 comes into contact with the bottom portion 7d of the housing 7, the coil spring 11 is further pressed by the translation member 5. The terminal member 13 is lighter than the translation member 5. As a result, the collision force applied to the bottom portion 7d of the housing 7 is mainly derived from the mass of the terminal member 13. The collision force applied to the bottom portion 7d of the housing 7 can be reduced compared to the case where the translation member 5 directly collides with the bottom portion 7d of the housing 7.

The elastic deformation amount of the coil spring 11 until the terminal member 13 comes into contact with the bottom portion 7d is less than the predetermined amount. This makes it possible to configure the terminal cushioning unit 10 such that, after the terminal member 13 comes into contact with the bottom portion 7d of the housing 7, the coil spring 11 is further pressed by the translation member 5, and the rubber member 12 starts to damp the motion of the translation member 5 along the axial direction D after the elastic deformation amount of the coil spring 11 increases to the predetermined amount.

The terminal cushioning unit 10 includes the rod portion 14 that extends along the axial direction D and is fixed to the translation member 5. The rod portion 14 undergoes torsional deformation in response to rotation of the gear 3 in a state where the rod portion 14 is in contact with the rubber member 12 at the stroke terminal portion 6. This makes it possible to absorb the kinetic energy of the translation member 5 by causing the rod portion 14 to undergo torsional deformation at the stroke terminal portion 6.

### [Modifications]

Although the embodiments of the present invention have been described above, the present invention is not limited to the embodiments described above. The present invention can be implemented in various forms, including the embodiments described above, with various modifications and improvements based on the knowledge of those skilled in the art.

In the above embodiment, the actuator 100 included the rod portion 14 fixed to the translation member 5 and capable of torsional deformation, but this configuration is not essential. The torsional deformation function may be omitted, or the translation member 5 and the terminal member 13 may be coupled by a configuration different from the rod portion 14.

In the above embodiment, the damping by the rubber member 12 started after the elastic deformation amount of the coil spring 11 reached the predetermined amount, but this configuration is not essential. The damping by the rubber member 12 may start when the coil spring 11 begins to be compressed.

In the above embodiment, the terminal member 13 was lighter than the translation member 5, but this configuration is not essential. The terminal member 13 may have a mass equal to or greater than that of the translation member 5.

In the above embodiment, the terminal cushioning unit 10 was configured using the terminal member 13, but the present invention is not limited to this example. For example, the terminal cushioning unit 10 may be configured without using the terminal member 13 by restricting the relative rotation in the circumferential direction between the translation member 5 and the translation member guide portion 7c using a separate configuration.

In the above embodiment, the coil spring 11 was exemplified as the elastic portion, but the present invention is not limited to this example. For example, another elastically deformable member such as a disc spring or an air spring may be used.

In the above embodiment, the rubber member 12 was exemplified as the damping portion, but the present invention is not limited to this example. For example, a device that generates a damping force, such as an oil damper, may be employed at the stroke terminal portion 6. The rubber member 12 may be provided over the entire bottom portion 7d.

In the above embodiment, the terminal cushioning unit 10 was provided at the stroke terminal portion 6 on the retreating side of the translation member 5, but the present invention is not limited to this example. For example, the terminal cushioning unit 10 may be provided only at the stroke terminal portion on the advancing side, or may be provided at both the stroke terminal portions on the advancing side and the retreating side.

In the above embodiment, the actuator 100 was described as being applied to a hydraulic brake device, but the actuator 100 may be applied to devices other than a hydraulic brake device.

## Claims

1. An actuator comprising:
a motor;
a rotating member configured to be rotationally driven by the motor;
a translation member configured to be moved along an axial direction of the rotating member in response to rotation of the rotating member; and
a terminal cushioning unit configured to cushion motion of the translation member at one or more of stroke terminal portions on an advancing side and a retreating side of the translation member.

2. The actuator according to claim 1,
wherein the terminal cushioning unit includes an elastic portion configured to be pressed by the translation member at the stroke terminal portion, and a damping portion configured to damp motion of the translation member along the axial direction at the stroke terminal portion.

3. The actuator according to claim 2,
wherein the damping portion starts to damp the motion of the translation member along the axial direction after an elastic deformation amount of the elastic portion reaches a predetermined amount as the elastic portion is pressed by the translation member.

4. The actuator according to claim 2, further comprising:
a housing accommodating the translation member and the terminal cushioning unit, the housing including a bottom portion at which the terminal cushioning unit is located at the stroke terminal portion,
wherein the terminal cushioning unit includes a terminal member provided on a bottom portion side so as to sandwich the elastic portion with the translation member in the axial direction, and
wherein the terminal member is lighter than the translation member.

5. The actuator according to claim 3, further comprising:
a housing accommodating the translation member and the terminal cushioning unit, the housing including a bottom portion at which the terminal cushioning unit is located at the stroke terminal portion,
wherein the terminal cushioning unit includes a terminal member provided on a bottom portion side so as to sandwich the elastic portion with the translation member in the axial direction, and
wherein the elastic deformation amount of the elastic portion until the terminal member comes into contact with the bottom portion is less than the predetermined amount.

6. The actuator according to any one of claims 2 to 5,
wherein the terminal cushioning unit includes a rod portion fixed to the translation member so as to extend along the axial direction, and
wherein the rod portion undergoes torsional deformation in response to rotation of the rotating member in a state where the rod portion is in contact with the damping portion at the stroke terminal portion.
